# FASCICULE DE BREVET EUROPEEN

(11) **EP 0 953 160 B1**
(45) Date de publication et mention de la délivrance du brevet: **18.07.2007**
(21) Numéro de dépôt: 98954532.2
(22) Date de dépôt: 06.11.1998
(51) Int. Cl.: G02B 1/10

(54) **LENTILLE OPHTALMIQUE EN VERRE, ORGANIQUE A INTERCOUCHE ANTI-CHOCS ET SON PROCEDE DE FABRICATION**
OPHTHALMISCHE KUNSTSTOFF-LINSE MIT STOSSSCHÜTZENDER ZWISCHENSCHICHT UND VERFAHREN ZUR HERSTELLUNG
OPHTHALMIC LENS MADE OF ORGANIC GLASS WITH SHOCKPROOF INTERMEDIATE LAYER AND METHOD FOR MAKING SAME

(30) Priorité: 18.11.1997 FR 9714445
(43) Date de publication de la demande: 03.11.1999
(73) Titulaire: ESSILOR INTERNATIONAL COMPAGNIE GENERALE D'OPTIQUE, 94227 Charenton cédex (FR)
(72) Inventeur: DEGAND, Jean-Pierre, F-75002 Paris (FR); ROBERT, Anne, F-94000 Créteil (FR)
(74) Mandataire: Catherine, Alain
(86) Numéro de dépôt international: PCT/FR1998/002376
(87) Numéro de publication internationale: WO 1999/026089

(56) Documents cités:
- EP-A- 0 119 482
- EP-A- 0 463 747
- EP-A- 0 580 857
- PATENT ABSTRACTS OF JAPAN vol. 096, no. 006, 28 juin 1996 & JP 08 054501 A (HOYA CORP), 27 février 1996

## Description

La présente invention concerne une lentille ophtalmique en verre organique à intercouche anti-chocs et son procédé de fabrication.

Les lentilles ophtalmiques en verre organique sont plus sensibles à la rayure et à l'abrasion que les lentilles en verre minéral.

Il est connu de protéger en surface les lentilles en verre organique au moyen de revêtements durs généralement à base de polysiloxane.

Il est également connu de traiter les lentilles en verre organique de façon à empêcher la formation de reflets parasites gênants pour le porteur de la lentille et ses interlocuteurs. La lentille est alors pourvue d'un revêtement anti-reflets mono- ou multicouche, généralement en matière minérale.

Lorsque la lentille comporte dans sa structure un revêtement anti-abrasion, le revêtement anti-reflets est déposé sur la surface de la couche anti-abrasion. Un tel empilement diminue la résistance aux chocs, en rigidifiant le système qui devient alors cassant. Ce problème est bien connu dans l'industrie des lentilles ophtalmiques en verre organique.

Ainsi, les brevets japonais 63-141001 et 63-87223 décrivent des lentilles en verre organique comportant un primaire anti-chocs à base de résine de polyuréthanne thermoplastique. Le brevet US 5015523 quant à lui préconise l'emploi de primaires anti-chocs acryliques cependant que le brevet européen EP-040411 et le brevet japonais JP 1996-54501 décrivent l'utilisation de primaires anti-chocs à base de polyuréthanne thermodurcissable.

Aucune des techniques décrites dans les brevets ci-dessus ne permet d'allier résistance élevée à l'abrasion pour la lentille finale et absence ou faible teneur en solvant organique dans la composition primaire.

Le brevet EP-0580857 décrit un primaire d'adhésion utilisable dans le domaine de l'optique, comprenant un copolymère résultant de la copolymérisation de monomères absorbeurs UV, comportant une double liaison insaturée et d'un autre monomère, en particulier d'un autre monomère comportant une double liaison insaturée. Ce primaire d'adhésion résiste particulièrement bien aux intempéries mais n'a pas été conçu dans le but d'apporter des propriétés anti-chocs.

En outre, on a utilisé ces dernières années des verres organiques ayant des indices de réfraction de plus en plus élevés pour fabriquer des lentilles ophtalmiques. Au fur à mesure de l'accroissement de l'indice de réfraction, l'épaisseur de la lentille nécessaire pour obtenir le même niveau de correction a diminué. Les lentilles résultantes sont donc plus fines et plus légères, et par conséquent plus attractives pour l'utilisateur.

Ces verres organiques d'indice de réfraction plus élevé, cependant, tendent à être relativement mous et à se rayer plus facilement. Il est bien sûr possible de revêtir ces lentilles avec des revêtements durs anti-abrasion, éventuellement comme précédemment avec une intercouche de primaire anti-chocs, mais les matériaux qui étaient alors préconisés pour former ces primaires anti-chocs se sont avérés mal adaptés pour l'utilisation avec ces nouveaux verres organiques d'indice de réfraction élevé.

Le document EP-A-0680492 préconise l'utilisation d'une couche de primaire anti-chocs formée à partir d'une dispersion aqueuse de polyuréthanne appliquée directement sur une surface du substrat en verre organique.

Bien que de tels primaires soient satisfaisants, il serait souhaitable de trouver des compositions de primaires ayant des propriétés de résistance aux chocs accrues tout en maintenant la résistance à l'abrasion de la couche anti-abrasion. De plus, il serait également souhaitable de disposer de matériaux pour cette couche de primaire anti-chocs permettant aisément d'adapter son indice à celui du substrat en verre organique, en particulier dans le cas de substrat en verre organique d'indice de réfraction élevé.

La demanderesse vient de découvrir, d'une façon inattendue, que l'utilisation de compositions de latex contenant au moins un latex incluant des motifs butadiène, permettait d'obtenir des couches de primaire anti-chocs entre un substrat en verre organique et un revêtement anti-abrasion, éventuellement revêtu d'un revêtement anti-reflets, ayant les propriétés voulues de résistance aux chocs et dont l'indice peut être, le cas échéant, aisément adapté à l'indice de réfraction du verre organique, sans nuire aux propriétés de résistance à l'abrasion et anti-reflets des revêtements anti-abrasion et anti-reflets.

La présente invention a donc pour objet une lentille ophtalmique selon la revendication 1 comprenant un substrat en verre organique, au moins un revêtement anti-abrasion et au moins une couche de primaire anti-chocs intercalée entre le verre organique et le revêtement anti-abrasion dont la couche de primaire anti-chocs est formée à partir d'une composition de latex comprenant au moins un latex contenant des motifs butadiène.

Un autre objet de l'invention concerne un procédé de fabrication de cette lentille selon la revendication 13.

Dans la présente demande, on entend par motif butadiène, le motif butadiène proprement dit (̵CH₂-CH=CH-CH₂)̵ , ainsi que le motif isoprène

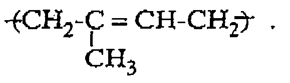

Comme cela est bien connu, les latex sont des dispersions stables d'un polymère dans un milieu aqueux.

Les compositions de latex de la présente invention peuvent être constituées uniquement d'un ou plusieurs latex comportant des motifs butadiène. Ces compositions peuvent être également constituées d'un ou plusieurs latex comportant des motifs butadiène mélangés avec un ou plusieurs autres latex ne comportant pas de motifs butadiène.

Les latex comportant des motifs butadiène selon l'invention sont exempts de groupements fonctionnels uréthannes.

Les latex comportant des motifs butadiène convenant pour les compositions de latex selon la présente invention sont les latex de polyisoprène naturel (NR) ou synthétique (IR), les latex de polybutadiène (BR), les latex de copolymères de butadiène-styrène (SBR), les latex de copolymères de butadiène-styrène carboxylés (C-SBR), les latex de copolymères de butadiène-acrylonitrile (NBR), les copolymères de butadiène-acrylonitrile carboxylés (C-NBR), les latex du type ABS (acrylonitrile, butadiène, styrène), les latex de copolymères de butadiène-acrylonitrile hydrogénés (H-NBR), les latex de copolymères d'isobutylène-isoprène (IIR), les latex de copolymères d'isobutylène-isoprène halogénés (XIIR), par exemple chlorés ou bromés, et leurs mélanges.

Les latex contenant des motifs butadiène recommandés selon la présente invention sont les latex de polybutadiène, de copolymères de butadiène-styrène carboxylés, de copolymères d'acrylonitrile-butadiène carboxylés.

Le latex comprenant les motifs polybutadiène renferme préférentiellement de 20 à 100% de polybutadiène.

Parmi les latex ne comportant pas de motifs butadiène convenant pour les compositions de latex selon l'invention, on peut citer les latex de poly(méth)acrylique (ACM), les latex de polyuréthanne et les latex de polyester.

Les latex de poly(méth)acrylique sont des latex de copolymères constitués principalement par un (méth)acrylate, tel que par exemple le (méth)acrylate d'éthyle ou de butyle, ou de méthoxy ou éthoxyéthyle, avec une proportion généralement mineure d'au moins un autre comonomère, tel que par exemple du styrène.

Les latex de poly(méth)acrylique recommandés dans les compositions de latex selon l'invention, sont les latex de copolymères acrylate-styrène.

Les compositions de latex particulièrement recommandées selon l'invention, sont les compositions de latex comportant soit uniquement un latex de polybutadiène, un latex de copolymères de butadiène-styrène, un latex de copolymères de butadiène-acrylonitrile, ou un mélange de latex de copolymères de butadiène-styrène avec un latex de polyacrylique et/ou de polyuréthanne.

Dans les compositions contenant un mélange de latex, l'extrait sec du ou des latex ne comportant pas de motifs butadiène peut représenter de 10 à 80%, de préférence 10 à 60% en poids de l'extrait sec des latex présents dans la composition.

Les compositions de latex selon l'invention peuvent comporter tout ingrédient classiquement utilisé dans les couches primaires pour l'adhésion de revêtement anti-abrasion sur des lentilles ophtalmiques en verre organique. En particulier, elles peuvent comprendre un agent de réticulation, un agent anti-oxydant, un absorbeur UV, un agent tensioactif, dans les proportions classiquement utilisées.

Comme agents tensioactifs, on peut utiliser le Baysilone OL 31, le FC 430 commercialisés par la société 3M, le Silwet LS 7657, L 7604 ou L 77 de la société OSI Specialities.

La quantité d'agent tensioactif, utilisée est généralement de 0 à 1% en poids par rapport au poids total des latex présents dans la composition.

Généralement, la quantité d'agent de réticulation utilisée est de 0 à 5% en poids par rapport au, poids total des latex présents dans la composition, de préférence de l'ordre de 3%.

La présence d'un agent réticulant permet d'éviter l'apparition éventuelle de craquelures de vernis dur appliqué ultérieurement sur le primaire.

Un agent de réticulation recommandé, est un dérivé d'aziridine commercialisé sous la dénomination CX 100 par la Société ZENECA RESINS.

Il est particulièrement souhaitable d'inclure dans les compositions de latex selon l'invention un agent anti-oxydant et/ou un absorbeur UV dans des proportions, pour chacun de ces agents, variant de 0 à 10% en poids en matière active, de préférence de 0 à 5% en poids, et mieux encore de l'ordre de 2,5 % en poids.

L'agent antioxydant et l'absorbeur UV sont choisis solubles ou facilement dispersables en solution aqueuse. Préférentiellement, l'agent antioxydant est introduit dans le latex sous la forme d'une dispersion aqueuse.

On utilise plus particulièrement des anti-oxydants phénoliques qui se sont avérés remarquablement efficaces pour les primaires de l'invention.

Un exemple d'un tel type d'agent anti-oxydant est l'IRGANOX DW 245, commercialisé par la société CIBA. Il s'agit du bis (tert-butyl-3-hydroxy-4-méthyl-5-phényl-3 propionate de triéthylène glycol), en solution aqueuse.

Comme absorbeur UV, on utilisera de préférence un absorbeur UV de type benzimidazole, et de préférence du type comportant une fonction sulfonate.

A titre d'exemple d'un tel absorbeur UV, on peut citer le PARSOL HS qui est le sel de sodium de l'acide sulfonique suivant 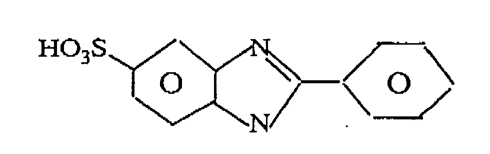 commercialisé par la société GIVAUDAN-ROURE.

La présence combinée d'un agent anti-oxydant et d'un absorbeur UV dans la couche de primaire est avantageuse car elle permet d'améliorer de façon remarquable l'adhérence à sec totale du revêtement anti-abrasion. Ainsi, lorsque la couche de primaire comporte une telle combinaison agent anti-oxydant un absorbeur UV, l'adhérence à sec totale du revêtement anti-abrasion est conservée même après 200 heures d'insolation, ce qui n'est pas le cas lorsque la couche de primaire ne comporte pas d'antioxydant.

La combinaison IRGANOX DW 245 et PARSOL HS est particulièrement préférée.

Les substrats des lentilles conformes à la présente invention sont tous substrats en verre organique couramment utilisés pour les lentilles ophtalmiques organiques.

Parmi les substrats convenant pour les lentilles selon l'invention, on peut citer des substrats obtenus par polymérisation, des (méth)acrylates d'alkyle, en particulier les (méth)acrylates d'alkyle en C₁-C₄ tels que le méthyl(méth)acrylate et l'éthyl(méth)acrylate, les dérivés allyliques tels que les allylcarbonates de polyol aliphatique ou aromatique, linéaires ou ramifiés, les thio(méth)acryliques, les thiouréthannes, les (méth)acrylates aromatiques polyéthoxylés tels que les bisphénols-A diméthacrylates polyéthoxylés.

Parmi les substrats recommandés, on peut citer des substrats obtenus par polymérisation des allyl carbonates de polyols parmi lesquels on peut mentionner l'éthylène glycol bis allylcarbonate, le diéthylène glycol bis 2-méthyl carbonate, le diéthylène glycol bis (allyl carbonate), l'éthylène glycol bis (2-chloro allyl carbonate), le triéthylène glycol bis (allyl carbonate), le 1,3-propane diol bis (allyl carbonate), le propylène glycol bis (2-éthyl allyl carbonate), le 1,3-butane diol bis (allyl carbonate), le 1,4-butane diol bis (2-bromo allyl carbonate), le dipropylène glycol bis (allyl carbonate), le triméthylène glycol bis (2-éthyl allyl carbonate), le pentaméthylène glycol bis (allyl carbonate), l'isopropylène bis phénol-A bis (allyl carbonate).

Les substrats particulièrement recommandés sont les substrats obtenus par polymérisation du bis allyl carbonate du diéthylène glycol, vendu sous la dénomination commerciale CR39^{®} allyl diglycol carbonate par la Société PPG INDUSTRIE (lentille ORMA^{®} ESSILOR).

Parmi les substrats également recommandés, on peut citer les substrats obtenus par polymérisation de monomères thio(méth) acryliques, tels que ceux décrits dans la demande de brevet français FR-A-2 734 827.

Bien évidemment, les substrats peuvent être obtenus par polymérisation de mélanges des monomères ci-dessus.

Les revêtements anti-abrasion des lentilles ophtalmiques selon l'invention peuvent être tous revêtements anti-abrasion connus dans le domaine de l'optique ophtalmique.

Parmi les revêtements anti-abrasion recommandés dans la présente invention, on peut citer les revêtements obtenus à partir de compositions à base d'hydrolysat de silane, en particulier d'hydrolysat d'époxysilane, des compositions à base de dérivés acryliques telles que celles décrites dans la demande de brevet français n° 93 026 49.

De préférence, le revêtement anti-abrasion comprend un absorbeur UV dans des proportions de 0 à 10%, préférentiellement de 0 à 5% et mieux encore de l'ordre de 1% par rapport au poids total de la composition du revêtement anti-abrasion.

La présence d'un tel absorbeur UV dans le revêtement anti-abrasion conjointement avec la présence d'un agent anti-oxydant et/ou un absorbeur UV dans la couche de primaire anti-chocs intercalée, accroît la résistance au rayonnement de la lentille obtenue.

Comme indiqué précédemment, la lentille ophtalmique selon l'invention peut comporter en outre un revêtement anti-reflets déposé sur le revêtement anti-abrasion.

A titre d'exemple, le revêtement anti-reflets peut être constitué d'un film mono- ou multicouche, de matériaux diélectriques tels que SiO, SiO₂, Si₃N₄, TiO₂, ZrO₂, Al₂O₃, MgF₂ ou Ta₂O₅, ou leurs mélanges. Il devient ainsi possible d'empêcher l'apparition d'une réflexion à l'interface lentille-air.

Ce revêtement anti-reflets est appliqué généralement par dépôt sous vide selon l'une des techniques suivantes :
1/ Par évaporation, éventuellement assistée par faisceau ionique.
2/ Par pulvérisation par faisceau d'ions.
3/ Par pulvérisation cathodique.
4/ Par dépôt chimique en phase vapeur assisté par plasma.

Outre le dépôt sous vide, on peut aussi envisager un dépôt d'une couche minérale par voie sol/gel, (par exemple à partir d'hydrolysats de tétxaéthoxysilane).

Dans le cas où la pellicule comprend une seule couche, son épaisseur optique doit être égale à λ/4 où λ est une longueur d'onde comprise entre 450 et 650 nm.

Dans le cas d'un film multicouche comportant trois couches, on peut utiliser une combinaison correspondant à des épaisseurs optiques respectives λ/4-λ/2-λ/4 ou λ/4-λ/4-λ/4.

On peut en outre utiliser un film équivalent formé par plus de couches, à la place de l'une quelconque des couches faisant partie des trois couches précitées.

Les lentilles ophtalmiques selon l'invention peuvent être constituées d'un substrat en verre organique revêtu sur sa face arrière ou sa face avant d'une intercouche de primaire anti-chocs selon l'invention, d'un revêtement anti-abrasion déposé sur la couche de primaire et éventuellement d'un revêtement anti-reflets sur le revêtement anti-abrasion.

Egalement, le substrat peut être revêtu sur ses deux faces d'une couche de primaire anti-chocs selon l'invention, d'un revêtement anti-abrasion et éventuellement d'un revêtement anti-reflets.

De préférence, les lentilles ophtalmiques selon l'invention comportent un empilement de la couche de primaire anti-chocs, de revêtement anti-abrasion et éventuellement de revêtement anti-reflets sur la face arrière du substrat ou sur les deux faces du substrat.

Les lentilles ophtalmiques préférées selon l'invention comportent une seule couche de primaire antichocs déposée en face arrière de la lentille et, sur chacune des faces, un revêtement anti-abrasion et un revêtement anti-reflets appliqué sur le revêtement anti-abrasion.

Par exemple, on obtient une telle lentille en déposant la couche primaire par centrifugation sur la face arrière de la lentille. Puis, après séchage de cette couche, on applique par trempage ("dip coating") le revêtement dur sur les deux faces de la lentille. Enfin après durcissement de ce revêtement dur, on applique un revêtement anti-reflets sur les deux faces de la lentille.

Une lentille ophtalmique ainsi obtenue présente une excellente résistance à l'abrasion sur sa face avant, la plus sollicitée lors des manipulations de ses lunettes par l'utilisateur.

Selon la présente invention, l'épaisseur de la couche de primaire anti-chocs obtenue après séchage, est de préférence comprise entre 0,2 et 1 µm et plus particulièrement entre 0,4 et 0,8 µm.

L'épaisseur du revêtement anti-abrasion est quant à lui généralement compris entre 1 et 10 µm et plus particulièrement entre 2 et 6 µm.

La présente invention a donc également pour objet un procédé de fabrication d'une lentille comprenant un substrat en verre organique, au moins un revêtement anti-abrasion, éventuellement recouvert d'un revêtement anti-reflets, et au moins une couche de primaire anti-chocs intercalée entre le substrat et le revêtement anti-abrasion, le procédé comprenant :
- le dépôt sur au moins une face du substrat, par exemple par centrifugation, d'une couche d'une composition de latex telle que définie ci-dessus;
- le séchage de cette composition de latex pour former la ou les couches de primaire anti-chocs;
- le dépôt sur la ou les couches de primaire anti-chocs formées d'un revêtement dur anti-abrasion; et, facultativement,
- le dépôt sur le ou les revêtements durs anti-abrasion d'un revêtement anti-reflets.

Les conditions de séchage et de durcissement de la couche peuvent être déterminées par l'homme de l'art.

Par exemple, on peut procéder à un séchage par chauffage à des températures pouvant varier généralement de 90°C à 140°C pendant une durée variants par exemple, de 1 heure à quelques minutes.

Les exemples suivants illustrent la présente invention.

Dans les exemples, sauf indication contraire, tous les pourcentages et parties sont exprimés en poids.

### EXEMPLE COMPARATIF A et EXEMPLES 1 à 16

On dépose sur des substrats en verre organique ORMA^{®} en CR 39^{®} de la Société ESSILOR, par centrifugation, après dilution dans 50% d'eau, les compositions de latex indiquées dans le tableau I ci-après.

**TABLEAU I**

| Composition | Latex 1 | Nature | Latex 2 | Proportion massique | Réticulant |
|---|---|---|---|---|---|
| de latex | | chimique | (latex 3) | (%) | |
| n° | | | | Extrait sec du latex 2 | |
| | | | | Extrait sec du latex 3 | |
| 1 | Europrène 5587^{®} | C-SBR (1) | - | - | - |
| 2 | Europrène 5587^{®} | C-SBR | A639 (3) | 18,4 | - |
| 3 | Europrène 8487^{®} | C-SBR | - | - | - |
| 4 | Europrène 8487^{®} | C-SBR | - | - | CX 100 (4) |
| 5 | Europrène 8487^{®} | C-SBR | A639 | 18,4 | - |
| 6 | Baystal T 425C^{®} | C-SBR | A639 | 9 | - |
| 7 | Baystal T 425C^{®} | C-SBR | A639 | 9 | CX100 |
| 8 | Butonal LS 170K^{®} | C-SBR | A639 | 43,6 | CX100 |
| 9 | Butonal LS 170K^{®} | C-SBR | A639 | 75,6 | CX100 |
| 10 | Europrène 2621^{®} | C-NBR (2) | - | - | - |
| 11 | Europrène 2621^{®} | C-NBR | - | - | CX100 |
| 12 | Europrène 2621^{®} | C-NBR | A639 | 18,4 | - |
| 13 | Perbunan N latex VT^{®} | C-NBR | A639 | 9 | - |
| 14 | Perbunan N latex VT^{®} | C-NRB | A639 | 9 | CX100 |

| | | | | | |
|---|---|---|---|---|---|
| (1) C-SBR = copolymère styrène/butadiène à groupements carboxylés. (2) C-NBR= copolymère acrylonitrile/butadiène à groupements carboxylés. (3) (A639) latex de polyacrylique commercialisé par la Société ZENECA, (acrylique/styrène), (Extrait sec 45%). (4) Proportion massique de CX100, dérivé d'aziridine, commercialisé par la Société ZENECA RESINS , est la même pour toutes les formulations le contenant : 3%. (5) (R961) latex de polyuréthanne NEOREZ R961 de la Société ZENECA, (Extrait sec 34%). | | | | | |

Les compositions et certaines propriétés des latex utilisés dans les compositions du TABLEAU I sont indiquées dans le tableau II ci-après.

**TABLEAU II**

| Désignation | Type (Fournisseur) | Composition | pH | % extrait sec | Viscosité (mPa..s) | TG (°C) |
|---|---|---|---|---|---|---|
| Europrène^{®} 5587 | Styèrne/butadiène carboxylé (Enichem) | 75% styrène | 8,0 | 50 | 500 | 48 |
| Europrène^{®} 8487 | SBR carboxylé (Enichem) | 65% styrène | 8,5 | 50 | 500 | + 8 +48 |
| Europrène^{®} 2621 | Acrylonitrile/ butadiène carboxylé (Enichem) | 30% acrylonitrile | 8,0 | 49 | 100 | - 29 |
| Baystal T^{®} 425C | SBR carboxylé (Bayer) | 55% styrène | 9,0 | 50 | 140 | - 8 |
| Perbunan^{®} N latex VT | NBR carboxylé (Bayer) | 30% acrylonitrile | 8,5 | 50 | 50 | -25 |
| Butonal^{®} LS 170 K | SBR carboxylé (BASF) | 56% styrène | 3 | 58 | 400 | -55 |

Le dépôt de la couche primaire est effectué sur la face arrière des lentilles ophtalmiques, par centrigugation.

Les conditions de centrifugation ont été déterminées pour obtenir une épaisseur de couche de primaire anti-chocs de 1 µm environ. Ainsi, la vitesse de rotation de la centrifugation était comprise entre 1500 et 2000 tours/minute et le temps de maintien à cette vitesse était de 15 secondes.

Les dépôts étaient ensuite séchés pendant 1 minute par entraînement en phase vapeur au moyen d'un fluide FLUORINERT FC 3283 de la société 3M ayant une température d'ébullition de 128°C pour réaliser les couches de primaire anti-chocs selon l'invention.

Après environ 15 minutes refroidissement on déposait sur les faces de chacune des lentilles un revêtement anti-abrasion par trempage (procédé dit de "dip coating") et cuisson classique.

La composition de revêtement anti-abrasion était préparée en ajoutant goutte à goutte 80,5 parties d'acide chlorhydrique 0,1N à une solution contenant 224 parties de γ-glycidoxypropyl triméthoxy silane (GLYMO) et 120 parties de diméthyl diéthoxy silane (DMDES).

La solution hydrolysée était agitée pendant 24 heures à température ambiante et on ajoutait alors 718 parties d'une dispersion à 30% de silice colloïdale dans le méthanol, 15 parties d'acétyl acétonate d'aluminium et 44 parties d'éthyl cellosolve. On ajoutait une faible quantité d'un agent tensio-actif.

La teneur en matière sèche théorique de la composition était de l'ordre de 13% de solide basée sur le DMDES hydrolysé.

Cette solution était déposée par trempage puis prédurcie pendant 15 minutes à 60°C. Le substrat revêtu de ce revêtement anti-abrasion était ensuite placé dans un four à 100° pendant 3 heures pour obtenir un revêtement anti-abrasion ayant une épaisseur de 3,5 µm.

Les lentilles revêtues de la couche de primaire anti-chocs et du revêtement anti-abrasion étaient ensuite soumises à un traitement anti-reflets par évaporation sous vide. Le traitement anti-reflets est déposé sur les deux faces de chaque lentille. Le revêtement anti-reflets sur le revêtement anti-abrasion était obtenu par dépôt sous vide :
- d'une première couche à base d'oxyde de zirconium et de titane;
- d'une deuxième couche à base de SiO₂; l'épaisseur optique pour ces deux couches prises globalement étant voisines de λ/4;
- d'une troisième couche à base de TiO₂, d'épaisseur optique λ/2,
- d'une quatrième couche à base de SiO₂, d'épaisseur optique λ/4.

La résistance à l'abrasion a été évaluée par détermination de la valeur BAYER sur les substrats revêtus uniquement de la couche de primaire anti-chocs et du revêtement anti-abrasion. La détermination de cette valeur BAYER a été établie conformément à la norme ASTM F 735.81.

La résistance aux chocs des lentilles ophtalmiques obtenues a été déterminée sur les substrats revêtus de la couche de primaire, la couche de revêtement anti-abrasion et le revêtement anti-reflet conformément au test de la chute de billes. Dans ce test, on fait tomber des billes avec une énergie croissante au centre du verre revêtu jusqu'à l'étoilement ou la cassure de celui-ci. L'énergie minimale imposée lors de ce test est de 15,2 g/mètre (correspondant à la première hauteur de chute). On calcule ensuite l'énergie moyenne de rupture du substrat revêtu.

Les résultats sont donnés dans le tableau III ci-après.

A titre de comparaison (Exemple comparatif A), on a réalisé des lentilles ophtalmiques comprenant des substrats et des revêtements anti-abrasion et anti-reflets analogues à ceux des exemples précédents, mais comportant une couche de primaire anti-chocs d'une épaisseur de 1 µm, obtenue par centrifugation et séchage d'un latex de polyuréthanne du commerce NEOREZ R961^{®} de la Société ZENECA. La couche de primaire anti-chocs était obtenue par centrifugation à 2000 tours/minute pendant 10 secondes, puis chauffage pendant 15 minutes à 100°C.

Les résultats de résistance à l'abrasion et aux chocs sont indiqués dans le tableau III ci-après.

**TABLEAU III**

| Composition de latex n° | Nature chimique (proportions massiques des différents latex) | Nbre verres testés (choc) | Epaisseur centre des verres (mm) | Energies de rupture (mJ) | Bayer |
|---|---|---|---|---|---|
| 1 (E5587) | C-SBR | 20 | 2,07 | 640 | 3,4 |
| 2 (E5587) | C-SBR/A639 (80120), | 19 | 2,05 | 550 | 3,0 |
| 3 (E8487 | C-SBR | 58 | 2,01 | 750 | 3,3 |
| 4 (E8487) | C-SBR/CX100 | 19 | 2,07 | 545 | |
| 5 (E8487) | C-SBR/A639 (80/20) | 19 | 2,03 | 540 | |
| 6 (Baystal^{®}) | C-SBR/A639 (90110) | 25 | 1,96 | 890 | 2,6 |
| 7 (Baystal^{®}) | C-SBR/A639 (90/10) CX100 | 20 | 2,12 | 1520 | 2,5 |
| 8 (Butonal^{®}) | C-SBR/A639 (50/50) CX100 | 18 | 2,02 | 1050 | 3,4 |
| 9 (Butonal^{®}) | C-SBR/A639 (20/80) CX100 | 18 | 2,03 | 740 | 3,6 |
| 10 (E2621) | C-NBR | 79 | 2,03 | 1240 | 3,4 |
| 11 (E2621) | C-NBR/CX100 | 36 | 2,06 | 870 | |
| 12 (E2621) | C-NBR/A639 (80/20) | 36 | 2,02 | 1000 | 2,7 |
| 13 (Perbunan^{®}) | C-NBR/A639 (90/10) | 27 | 2,05 | 1120 | 2,8 |
| 14 (Perbunan^{®}) | C-NBR/A639 (90/10) CX100 | 20 | 2,14 | 1025 | |
| | | | | | |
| Comparatif A Neorez^{®} R961 | Polyuréthanne (Zeneca) | | 2,04 | 490 | 4,5 |

Les résultats du tableau III montrent que l'emploi des compositions de latex selon l'invention pour former les couches de primaire anti-chocs de lentilles ophtalmiques conduisent à des lentilles ophtalmiques ayant des énergies de rupture notablement accrues par rapport à une couche de primaire anti-chocs formée à partir d'un latex de l'art antérieur, tout en conservant des résistances à l'abrasion excellentes.

On notera en particulier que les latex à teneurs élevées en motifs butadiène conduisent à des couches de primaire anti-chocs particulièrement résistantes aux chocs de même que les compositions de latex comprenant un latex polyacrylique ou un latex polyacrylique et un latex de polyuréthanne.

## Revendications

1. Lentille ophtalmique comprenant un substrat en verre organique, au moins un revêtement anti-abrasion et au moins une couche de primaire anti-chocs intercalée entre le verre organique et le revêtement anti-abrasion, **caractérisée en ce que** la couche de primaire anti-chocs est formée par un procédé comprenant au moins les étapes suivantes:
a) déposer sur au moins une face du substrat en verre organique une composition de latex comprenant au moins un latex choisi parmi les latex de polyisoprène naturel ou synthétique, de polybutadiènc, de copolymères de butadiène-styrène, de copolymères de butadiène-styrène carboxylés, de copolymères de butadiène-acrylonitrile, de copolymères de butadiène-acrylonitrile carboxylés, de copolymères acrylonitrile-butadiène-styrène, de copolymères de butadiène-acrylonitrile hydrogénés, de copolymères d'isobutylène-isoprène, de copolymères d'isobutylène-isoprène halogénés, et leur mélanges ; et
b) sécher la composition de latex de façon à obtenir une couche de primaire anti-chocs comportant des motifs butadiène proprement dit (̵CH₂CH=CH-CH₂)̵ et/ou des motifs isoprène (̵CH₂C(CH₃)=CHCH₂)̵.

2. Lentille ophtalmique selon la revendication 1, **caractérisée en ce que** la composition de latex comporte un ou plusieurs autres latex ne contenant pas de motifs butadiène.

3. Lentille ophtalmique selon la revendication 2, **caractérisée en ce que** le ou les autres latex ne contenant pas de motifs butadiène sont choisis parmi les latex de polyacrylique, les latex de polyméthacrylique, et les latex de polyuréthanne, et les latex de polyester.

4. Lentille ophtalmique selon la revendication 2 ou 3 **caractérisée en ce que** l'extrait sec du ou des latex ne contenant pas de motifs butadiène représente de 10 à 80% en poids, de préférence 10 à 60% en poids de l'extrait sec des latex présents dans la composition de latex.

5. Lentille ophtalmique selon l'une quelconque des revendications précédentes, **caractérisée en ce que** la composition de latex comprend en outre un agent de réticulation.

6. Lentille ophtalmique selon l'une quelconque des revendications précédentes, **caractérisée en ce que** la composition de latex comprend en outre un agent anti-oxydant.

7. Lentille ophtalmique selon la revendication 6, **caractérisée en ce que** l'agent anti-oxydant est sous forme d'une dispersion aqueuse.

8. Lentille ophtalmique selon l'une quelconque des revendications précédentes, **caractérisée en ce qu'**elle comprend une seule couche de primaire en face avant ou en face arrière du substrat, préférentiellement en face arrière du substrat.

9. Lentille ophtalmique selon la revendication 8, **caractérisée en ce qu'**elle comprend un revêtement anti-abrasion appliqué sur les deux faces de la lentille.

10. Lentille ophtalmique selon la revendication 9, **caractérisée en ce qu'**elle comprend un revêtement anti-reflets déposé sur le revêtement anti-abrasion de chacune des faces de la lentille.

11. Lentille ophtalmique selon l'une quelconque des revendications 1 à 8, **caractérisée en ce qu'**elle comprend une couche de primaire et une couche anti-abrasion déposées sur la face avant et la face arrière du substrat.

12. Lentille ophtalmique selon la revendication 11, **caractérisée en ce qu'**elle comprend un revêtement anti-reflets déposé sur les revêtements anti-abrasion.

13. Procédé de fabrication d'une lentille ophtalmique, **caractérisé en ce qu'**il comprend :
- le dépôt sur au moins une face du substrat en verre organique d'une composition de latex telle que définie dans l'une quelconque des revendications 1 à 7 ;
- le séchage de la composition de latex pour former la ou les couches de primaire anti-chocs ; et
- le dépôt sur la ou les couches de primaire anti-chocs obtenues, d'un revêtement anti-abrasion.

14. Procédé selon la revendication 13, **caractérisé en ce qu'**il comprend en outre le dépôt sur le ou les revêtements anti-abrasion d'un revêtement anti-reflets.

## Claims

1. Ophthalmic lens comprising a substrate made of organic glass, at least one abrasion-resistant coating and at least one impact-resistance primer layer inserted between the organic glass and the abrasion-resistant coating, **characterized in that** the impact-resistant primer layer is formed by a method comprising at least the following steps:
a) deposition on at least one face of the substrate made of organic glass of a latex composition comprising at least a latex selected from latices of natural or synthetic polyisoprene, of polybutadiene, of butadiene-styrene copolymers, of carboxylated butadiene-styrene copolymers, of butadiene-acrylonitrile copolymers, of carboxylated butadiene-acrylonitrile copolymers, of acrylonitrile-butadiene-styrene copolymers, of hydrogenated butadiene-acrylonitrile copolymers, of isobutylene-isoprene copolymers, of halogenated isobutylene-isoprene copolymers, and mixtures thereof and
b) drying the latex composition to obtain an impact-resistant primer layer comprising butadiene units (-CH₂CH=CH-CH₂-) and/or isoprene units (-CH₂C(CH₃)= CHCH₂).

2. Ophthalmic lens according to claim 1, **characterized in that** the latex composition comprises one or several other latices not comprising any butadiene units.

3. Ophthalmic lens according to claim 2, **characterized in that** the other latex or latices not comprising any butadiene units are selected from polyacrylic latices, polymethacrylic latices and polyurethane latices and polyesters latices.

4. Ophthalmic lens according to claim 2 or 3, **characterized in that** the solids content of the latex or latices not comprising any butadiene units represents from 10 to 80% by weight, preferably, from 10 to 60 % by weight of the solids content of the latices present in the latex composition.

5. Ophthalmic lens according to any one of the preceding claims, **characterized in that** the latex composition comprises, moreover, a crosslinking agent.

6. Ophthalmic lens according to any one of the preceding claims, **characterized in that** the latex composition comprises, moreover, an antioxidant.

7. Ophthalmic lens according to claim 6, **characterized in that** the antioxidant is in the form of an aqueous dispersion.

8. Ophthalmic lens according to any one of the preceding claims, **characterized in that** it comprises only one layer of primer as front face or as rear face of the substrate, preferably as rear face of the substrate.

9. Ophthalmic lens according to claim 8, **characterized in that** it comprises an abrasion-resistant coating applied to both faces of the lens.

10. Ophthalmic lens according to claim 9, **characterized in that** it comprises an antireflective coating deposited on the abrasion-resistant coating of each of the faces of the lens.

11. Ophthalmic lens according to any one of claims 1 to 8, **characterized in that** it comprises a primer layer and an abrasion-resistant layer which are deposited on the front face and the rear face of the substrate.

12. Ophthalmic lens according to claim 11, **characterized in that** it comprises an antireflective coating deposited on the abrasion-resistant coatings.

13. Method for making an ophthalmic lens, **characterized in that** it comprises:
- the deposition on at least one face of the substrate made of organic glass of a latex composition as defined in any one of claims 1 to 7;
- the drying of the latex composition for form the impact-resistant primer layer(s); and
- the deposition of an abrasion-resistant coating on the impact-resistant primer layer(s) obtained.

14. method according to claim 13, **characterized in that** it comprises, moreover, the deposition of an anti-reflective coating on the abrasion-resistant coating(s).

## Patentansprüche

1. Ophthalmische Linse umfassend ein Substrat aus organischem Glas, zumindest eine abriebfeste Beschichtung und zumindest eine stoßfeste primäre Schicht, zwischengelagert zwischen dem organischen Glas und der abriebfesten Beschichtung, **dadurch gekennzeichnet, dass** die stoßfeste primäre Schicht mittels einem Verfahren hergestellt ist, welches zumindest die folgenden Schritte umfasst:
a) Aufbringen einer Latex-Züsammensetzung an zumindest einer Seite des Substrats aus organischem Glas, welche zumindest ein Latex umfasst, ausgewählt aus natürlichem oder synthetischen Polyisopren-, Polybutadien-, Butadien-Styren-Copolymer-, carboxiliertem Butadien-Styren-Copolymer-, Butadien-Acrylnitril-Copolymer-, carboxiliertem Butadien-Acrylnitril-Copolymer-, Acrylnitril-Butadien-Styren-Copolymer-, hydriertem Butadien-Acrylnitril-Copolymer-, Isobutylen-Isopren-Copolymer-, halogenisiertem Isobutylen-Isopren-Copolymer-Latex und Mischungen davon; und
b) Trocknen der Latex-Zusammensetzung, so dass eine stoßfeste primäre Schicht erhalten wird, welche Butadien-Einheiten umfasst, genau gesagt (-CH₂CH=CH-CH₂-) und/oder Isopren-Einheiten (-CH₂C(CH₃)=CHCH₂-).

2. Ophthalmische Linse nach Anspruch 1, **dadurch gekennzeichnet, dass** die Latex-Zusammensetzung eine oder mehrere andere Latizen umfasst, welche keine Butadien-Einheiten umfassen.

3. Ophthalmische Linse nach Anspruch 2, **dadurch gekennzeichnet, dass** das oder die anderen Latizen, welche keine Butadien-Einheiten umfassen, ausgewählt sind aus Polyacryl-Latex, Polymethacryl- Latex, Polyurethan-Latex und Polyester-Latex.

4. Ophthalmische Linse nach Anspruch 2 oder 3, **dadurch gekennzeichnet, dass** das trockene Extrakt des oder der Latizen, welche keine Butadien-Einheiten umfassen, 10 bis 80 Gewichtprozent, vorzugsweise 10 bis 60 Gewichtsprozent des trockenen Latex-Extrakts darstellt, welches in der Latex-Zusammensetzung vorhanden ist.

5. Ophthalmische Linse nach einem der vorangehenden Ansprüche, **dadurch gekennzeichnet, dass** die Latex-Zusammensetzung zudem ein Vernetzungsmittel umfasst.

6. Ophthalmische Linse nach einem der vorangehenden Ansprüche, **dadurch gekennzeichnet, dass** die Latex-Zusammensetzung zudem ein Antioxidationsmittel umfasst.

7. Ophthalmische Linse nach Anspruch 6, **dadurch gekennzeichnet, dass** das Antioxidationsmittel die Form eine wässrigen Dispersion hat.

8. Ophthalmische Linse nach einem der vorangehenden Ansprüche, **dadurch gekennzeichnet, dass** sie eine einzelne primäre Schicht an der Vorderseite oder an der Hinterseite des Substrats, vorzugsweise an der Hinterseite des Substrats umfasst.

9. Ophthalmische Linse nach Anspruch 8, **dadurch gekennzeichnet, dass** sie eine auf beide Seiten der Linse applizierte abriebfeste Beschichtung umfasst.

10. Ophthalmische Linse nach Anspruch 9, **dadurch gekennzeichnet, dass** sie eine Antireflexbeschichtung, aufgebracht auf der abriebfesten Beschichtung auf jeder der Seiten der Linse, umfasst.

11. Ophthalmische Linse nach einem der Ansprüche 1 bis 8, **dadurch gekennzeichnet, dass** sie eine primäre Schicht und eine abriebfeste Schicht, aufgebracht an der Vorderseite und an der Hinterseite des Substrats, umfasst.

12. Ophthalmische Linse nach Anspruch 11, **dadurch gekennzeichnet, dass** sie eine Antireflexbeschichtung, aufgebracht auf der abriebfesten Beschichtung, umfasst.

13. Verfahren zur Herstellung einer ophthalmischen Linse, **dadurch gekennzeichnet, dass** es umfasst:
- Aufbringen einer Latex-Zusammensetzung, wie in einem der Ansprüche 1 bis 7 definiert, auf zumindest einer Seite des Substrats aus organischem Glas;
- Trocknen der Latex-Zusammensetzung um die primäre(n) stoßfeste(n) Schicht(en) auszubilden; und
- Aufbringen einer abriebfesten Beschichtung auf der oder den primären stoßfesten Beschichtung(en).

14. Verfahren nach Anspruch 13, **dadurch gekennzeichnet, dass** es zudem ein Aufbringen einer Antireflexbeschichtung auf der oder den abriebfesten Beschichtung(en) umfasst.
